# EUROPEAN PATENT SPECIFICATION

(11) **EP 1 090 212 B1**
(45) Date of publication and mention of the grant of the patent: **29.05.2002**
(21) Application number: 99926626.5
(22) Date of filing: 16.06.1999
(51) Int. Cl.: F01N 3/08, B01J 19/08

(54) **THE OPTIMISATION OF GAS FLOW IN REACTORS FOR THE TREATMENT OF GASEOUS MEDIA**
GASSTROMOPTIMIERUNG IN GASBEHANDLUNGSREAKTOREN
OPTIMISATION DE FLUX DE GAZ DANS DES REACTEURS DE TRAITEMENT DE MILIEUX GAZEUX

(30) Priority: 24.06.1998 GB 9813482
(43) Date of publication of application: 11.04.2001
(73) Proprietor: Accentus plc, Didcot, Oxfordshire OX11 0QJ (GB)
(72) Inventor: NG, Ka Lok, Reading, Berkshire RG6 3UD (GB); WEEKS, David Michael, Abingdon, Oxfordshire OX13 5DB (GB)
(74) Representative: Lofting, Marcus John
(86) International application number: GB9901912
(87) International publication number: WO9967510

(56) References cited:
- WO-A-99/12638
- US-A- 4 390 354
- US-A- 4 419 113
- US-A- 4 954 320
- US-A- 5 766 289

## Description

The present invention relates to reactors for the treatment of gaseous media and, more specifically to reactors for the removal of noxious substances from the exhaust gases from internal combustion engines.

One type of reactor for the treatment of gaseous media consists of a cylindrical reactor chamber which has inlet and outlet ports by means of which it can be connected into a gas flow system. Inside the reactor chamber, and co-axial within it, is a hollow cylindrical gas permeable bed of active material. By the term "active material", as used herein, is meant a material which interacts with a gaseous medium to promote reaction therein as the gaseous medium passes through the reactor.

A reactor of this type is shown in EP 0608619 (see Figure 2). In a different configuration of reactor for through flow of gaseous media, entering at one end and exiting at the other, the bed of active material is held in place by two supporting disks made of an impermeable material. One support disk has a ring of axially directed holes around its periphery and the other disk has a central hole the diameter of which is approximately equal to the inside diameter of the cylindrical bed of active material. In use a gaseous medium to be processed is admitted to the reactor chamber via the port closer to the first support disk. The gaseous medium is then directed into the annular space between the outside of the cylindrical bed of active material and the wall of the reactor chamber. The closure of this space by the other support disk constrains the gaseous medium to pass radially through the bed of active material prior to leaving the reactor via the central electrode. The support disks are made of a temperature resistant insulating material and there is provided an electrical connection to the inner electrode by means of which a potential of some kilovolts can be applied to the inner electrode so as to establish a plasma discharge in the gaseous medium in the interstices in the gas permeable bed of active material.

In practice, it has been found that the gas flow distribution through the bed of active material of such a reactor is uneven, being greater at the downstream end of the bed of active material. Thus the reactor may not operate at its maximum efficiency because the upstream end of the bed of active material may be underused while the downstream end of the bed of active material may be subjected to a higher rate of gas flow than it can usefully process.

It is an object of the present invention to provide an improved reactor of the type described above for the processing of a gaseous medium.

According to the present invention there is provided a reactor for the treatment of a gaseous medium, including a cylindrical reactor chamber having an inlet port and an outlet port for a gaseous medium to be processed, a hollow cylindrical gas permeable bed of an active material contained within the reactor chamber and substantially co-axial therewith, an annular space between the outside of the bed of active material and the inside of the reactor chamber and means for constraining the gaseous medium to enter the said annular space at one end in an axial direction, the other end of said annular space being closed to axial flow of gaseous medium therefrom, the gaseous medium passing radially through the bed of active material, wherein the said annular space is configured to provide an impedance to the flow of the gaseous medium which increases along the length of the said annular space in the direction from the said one end towards the said other end.

The increasing impedance to the axial flow of the gaseous medium through the said annular space preferably is provided by progressively reducing the cross-sectional area of the said annular space. The reduction in the cross-sectional area of the said annular space may be continuous, but preferably is discontinuous. A preferred arrangement has two step reductions in the cross-sectional area of the said annular space, the first being greater than the second.

According to the present invention in a particular aspect the reactor is for the plasma-assisted treatment of gaseous media, the bed of active material is contained between two gas permeable co-axial disks and two support disks made of an impermeable temperature-resistant insulating material, the support disk nearer the inlet end of the reactor has a plurality of axially directed gas passages around its periphery, and the support disk nearer the outlet end of the reactor has a central hole the diameter of which is substantially equal to the internal diameter of the inner electrode so that a gaseous medium to be processed enters the annular space between the outer electrode and the wall of the reactor chamber axially but is constrained to pass radially through the bed of active material.

Preferably the active material is adapted to remove nitrogenous oxides and carbonaceous combustion products from the exhaust emissions from internal combustion engines.

The invention will now be described, by way of example, with reference to the accompanying drawings, in which:
Figure 1 is a schematic longitudinal section of an existing type of reactor for the plasma-assisted processing of a gaseous medium;
Figure 2 illustrates how the radial component of gas flow through a bed of active material included in the reactor of Figure 1 varies with distance along the reactor bed from the entrance to the active region of the reactor;
Figure 3 is a schematic longitudinal half-section of a first reactor embodying the invention for the processing of a gaseous medium;
Figure 4 is a schematic longitudinal half-section of a second reactor embodying the invention for the processing of a gaseous medium;
Figure 5 is a schematic longitudinal half-section of a third reactor embodying the invention for the processing of a gaseous medium;
Figure 6 is a flow diagram showing the radial components of gas flow for the embodiment of Figure 3;
Figure 7 is a flow diagram showing the radial component of gas flow for the embodiment of Figure 4;
Figure 8 is a flow diagram showing the radial component of gas flow for the embodiment of Figure 5; and
Figure 9 is a schematic longitudinal half-section of a fourth embodiment of the invention.

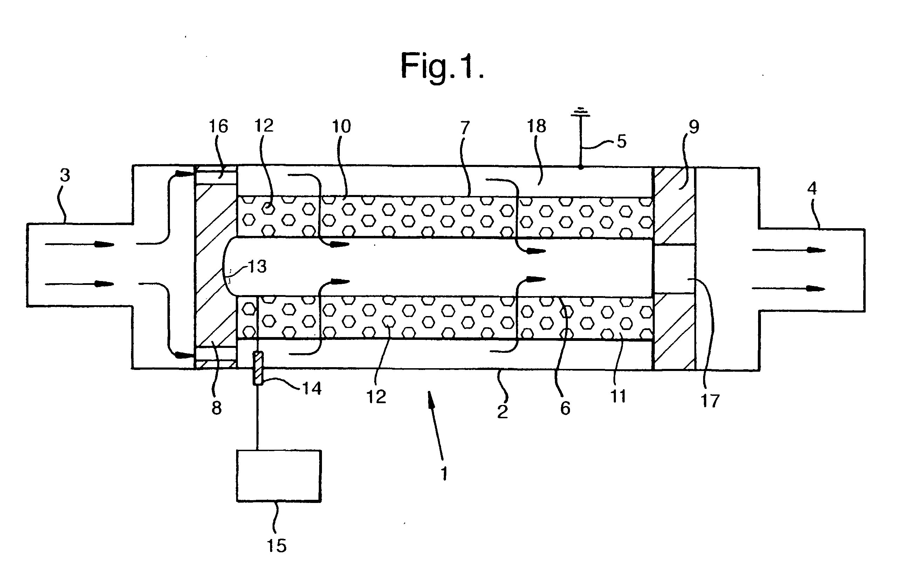

Referring to Figure 1, a reactor 1 for the plasma-assisted processing of a gaseous medium consists of a stainless chamber 2 which has an inlet stub 3 and an outlet stub 4. The chamber 2 is arranged, in use, to be connected to an earthing point 5. Perforated cylindrical stainless steel electrodes 6 and 7 and positioned co-axially within the chamber 2 by means of two impervious electrically-insulating supports 8 and 9. The space 10 bounded by the electrodes 6 and 7 and the insulating supports is filled with a bed 11 of pellets 12 of an active material which has a dielectric constant sufficient to enable a plasma to be established and maintained in the gaseous medium in the interstices between the pellets 12 of the bed 11 of active material. The upstream end 13 of the inner electrode 6 is closed off and arranged to be connected via an insulating feedthrough 14 to a source 15 of an electrical potential sufficient to excite the above-mentioned plasma in the gaseous medium.

The upstream electrode support 8 has a ring of axially-oriented gas passages 16 around its periphery, whereas the downstream electrode support 9 has a central hole 17 in it of approximately the same diameter as the internal diameter of the inner electrode 6. Thus, in use, a gaseous medium to be processed is directed axially into the annular space 18 between the outer electrode 7 and the wall of the chamber 2. As the gas cannot escape from the downstream end of the space 18, it is constrained to enter the bed 11 of active material and pass radially through it.

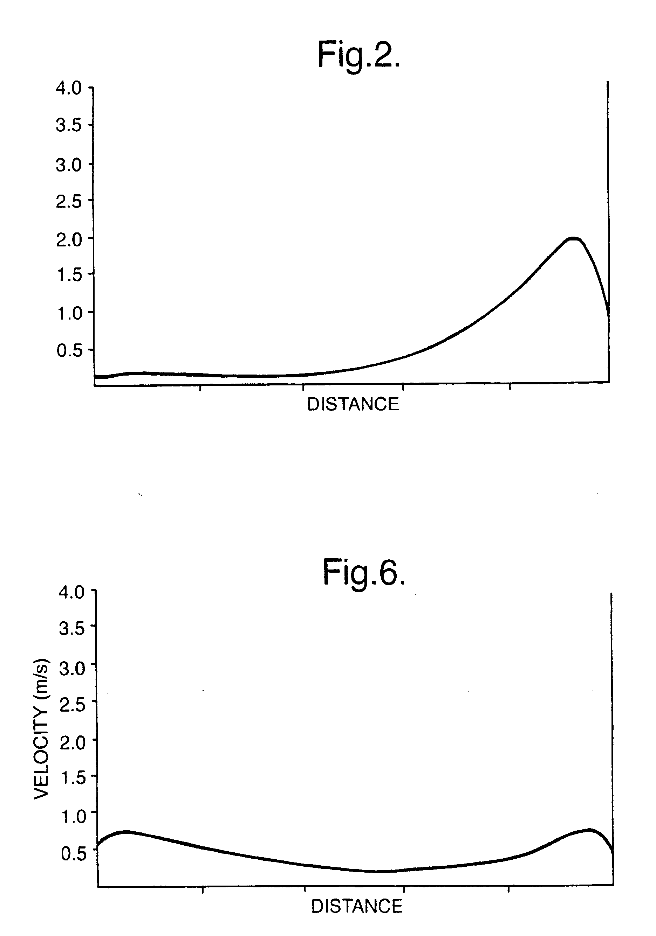

Figure 2 is a flow diagram showing how the radial component of gas flow for such a reactor varies along the length of the bed of active material. It can be seen that there is very little radial flow through the bed 11 for almost half its length and the radial gas flow increases progressively along the remainder of the bed 11 of active material. Thus, the overall efficiency of the bed 11 of active material is much below that which would be achieved if the radial flow of gas through the bed 11 of the reactor was regular. At present the active material at the downstream end of the reactor may be saturated while that at the upstream end of the reactor largely is unused.

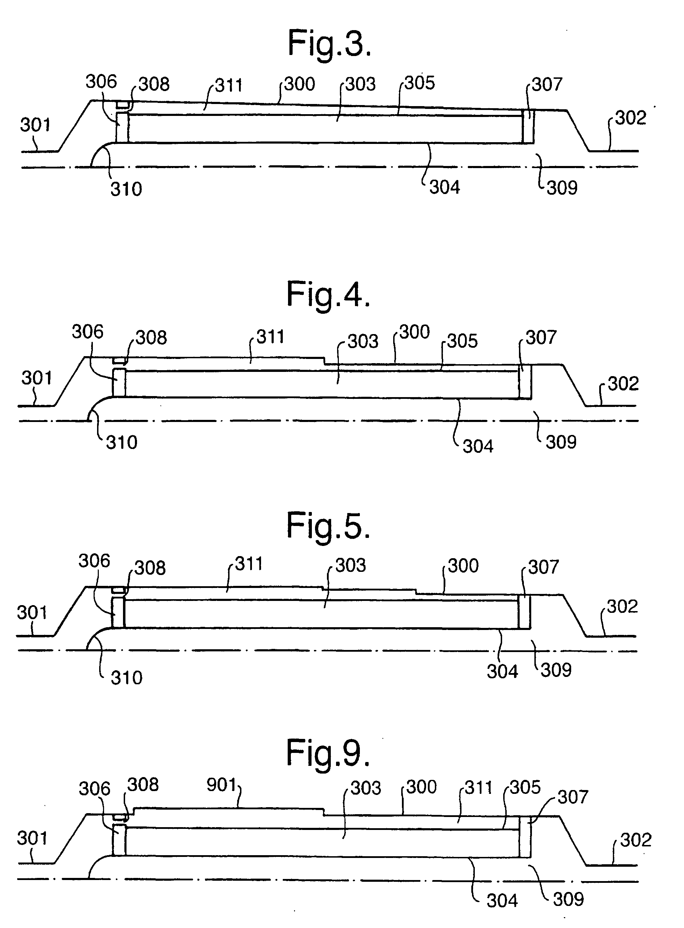

The present invention seeks to overcome this problem by progressively increasing the resistance to axial flow along the annular space 18 between the wall 2 of the reactor 1 and the outer electrode. Figures 3, 4 and 5 illustrate three ways in which this increase in the resistance to axial flow of the gaseous medium can be achieved.

Unlike Figure 1, these figures are half-sections and extraneous detail has been omitted. However, those parts which are common to all three figures have the same reference numerals.

Referring to Figure 3, a reactor for the processing of a gaseous medium consists of a reactor chamber 300 which has inlet and outlet fixing stubs 301 and 302, respectively. Within the reactor chamber 300 is a hollow cylindrical gas permeable bed 303 made of an active material adapted to carry out a desired process on the gaseous medium. For example, the active material may be adapted to catalyse a reaction between one or more components of the gaseous medium. The bed 303 of active materials is contained between two co-axial cylindrical support members 304 and 305, which are gas permeable and two disk transverse supports 306 and 307, made of an unpermeable material, as in the reactor described with reference to Figure 1. If the bed 303 is made of a material which is self supporting, the support members 304 and 305 can be omitted. As before, the support 306 nearer the inlet to the reactor chamber 300 has a number of axially directed gas passages 308 around its periphery and the support 307 nearer the outlet from the reactor chamber 300 has a central hole 309 of approximately the same diameter as the inner active bed support member 304. The inner active bed support 304 has a closed, domed end 310 which projects through the support 306 and facilitates the deflection of the incoming gaseous medium towards the periphery of the reactor chamber 300. As with the reactor previously described, a gaseous medium entering the reactor chamber 300 is directed into the annular space 311 between the outer active bed support 305 and the wall of the reactor chamber 300 initially in an axial direction but is then constrained to pass radially through the bed 303 of active material.

However, in the present case, the reactor chamber 300 is not a true cylinder, but tapers in the direction of gas flow along the space 311 between the outer active bed support 305 and the wall of the reactor 300. As a result, the impedance to axial gas flow increases along the annular space 311 between the outer active bed support 305 and the wall of the reactor chamber 300, so increasing the amount of gaseous medium which flows radially through the upstream part of the bed 303 of active material. A suitable taper angle is in the region of two degrees.

Figure 4 shows a second embodiment of the invention in which the diameter of the reactor chamber 300 is reduced half way along the bed 303 of active material. In a particular example, the width of the annular space 311 between the outer active bed support 305 and the wall of the reactor chamber is 10 mm initially and 5 mm for the second part of the reactor chamber 300. All other components are as for the reactor described with reference to Figure 3.

Figure 5 shows another embodiment of the invention in which there is a second step-wise reduction in the width of the annular space 311 between the outer active bed support 305 and the wall of the reactor chamber 300 half way along the second part of the bed 303 of active material. In another specific case, the widths of the regions of the annular space 311 between the outer active bed support 305 and the wall of the reactor chamber 300 are 10, 5 and 3 mm.

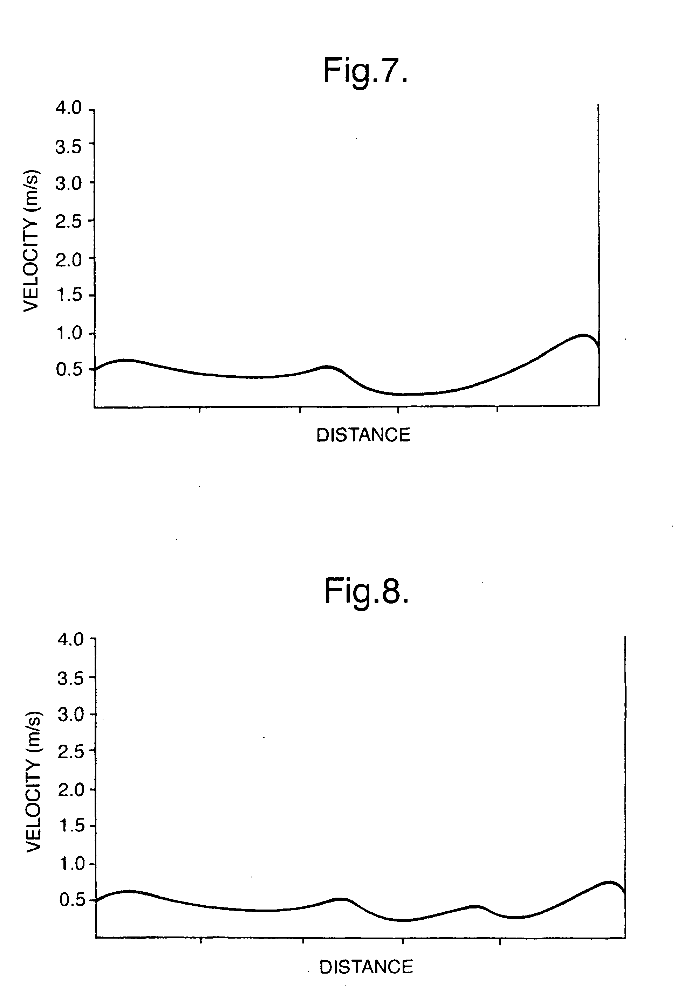

Figure 6 is a diagram showing the variation in radial gas flow along the bed 303 of active material for the embodiment of Figure 3. Compared with Figure 2 it can be seen that much more gas passes radially through first half of the bed 303 of active material. In fact the distribution of radial gas flow along the length of the bed 303 of active material is now approximately, symmetrical, but the middle two fifths, approximately of the bed 303 of active material still are underused.

Figure 7 is a diagram showing the variation in radial gas flow along the bed 303 of active material for the embodiment of Figure 4. More gas now passes radially through the first half of the bed 303 of active material than through the second half, with an intermediate peak at the position of the step where the width of the annular space 311 between the outer active bed support 305 and the wall of the reactor chamber 300 is halved. Immediately downstream of this position the radial gas flow rate is less than half that before it. This region of low gas flow extends about one fifth of the length of the bed 303 of active material.

Figure 8 is another gas flow diagram, similar to those of Figures 6 and 7, for the embodiment of Figure 5. It can be seen that this embodiment of the invention gives the most even distribution of radial gas flow through the bed 303 of active material.

Figure 9 shows another embodiment of the invention in which the opposite approach to the problem is adopted. In this embodiment of the invention, instead of reducing the width of the gap 311 between the outer active bed support 305 and the wall of the reactor chamber 300 along the length of the bed 303 of active material so as to cause more gas to be diverted radially in the upstream regions of the bed 303 of active material, a number of axial expansion chambers 901 are provided along the first part of the reactor chamber 300. In this arrangement, not only is the impedance to axial gas flow higher in the second region of the reactor 300 than in the first region, but the expansion chambers 901 reduce the pressure of the gaseous medium as it enters the second region of the reactor chamber 300.

The invention has been described above in connection with gas reactors in general. As before, if the reactor is for use in the plasma-assisted processing of gaseous media, specifically, the treatment of the exhaust emissions from internal combustion engines to remove noxious combustion products therefrom, then the inner and outer active bed supports 304 and 305 are made of a metal such as stainless steel and used as electrodes, the outer one being earthed, as is the reactor chamber 300. Also, the transverse supports 306 and 307 have to be made of a temperature resistant insulating material. The material of the active bed 303 has to have a dielectric constant sufficient to enable a plasma to be established and maintained in the interstices within the bed of active material.

## Claims

1. A reactor for the treatment of a gaseous medium, including a cylindrical reactor chamber (300) having an inlet port (301) and an outlet port (302) for a gaseous medium to be processed, a hollow cylindrical gas permeable bed (303) contained within the reactor chamber (300) and substantially co-axial therewith, the gas permeable bed comprising a catalytically active material for interacting with the gaseous medium to promote chemical reaction therein, an annular space (311) between the outside of the bed of active material (303) and the inside of the reactor chamber (300) and means (306) for constraining the gaseous medium to enter the said annular space (311) at one end in an axial direction, the other end of said annular space (311) being closed to axial flow of gaseous medium therefrom, the gaseous medium passing radially through the bed (303) of active material, **characterised in that** the said annular space (311) is configured to provide an impedance to the flow of the gaseous medium which increases along the length of the said annular space (311) in the direction from the said one end towards the said other end.

2. A reactor according to claim 1, further **characterised in that** the width of the said annular space (311) decreases continuously along the length of the said annular space (311).

3. A reactor according to claim 1, further **characterised in that** there is at least one discontinuous decrease in the width of the said annular space (311) along the length of the said annular space (311).

4. A reactor according to claim 3, further **characterised in that** there is a single discontinuous decrease in the width of the said annular space (311) approximately at the middle of the said annular space (311).

5. A reactor according to claim 3, further **characterised in that** there are two discontinuous decreases in the width of the said annular space (311).

6. A reactor according to claim 5, further **characterised in that** the first discontinuous decrease in the width of the said annular space (311) occurs approximately at the middle of the said annular space (311) and the second discontinuous decrease in the width of the annular space (311) occurs approximately three quarters along the length of the said annular space (311).

7. A reactor according to claim 5, further **characterised in that** the second discontinuous decrease in the width of the said annular space (311) is less than the first discontinuous decrease in the width of the said annular space (311).

8. A reactor according to claim 1, further **characterised in that** a first portion of the reactor chamber (300) is provided with at least one axially extending expansion chamber (901).

9. A reactor according to any preceding claim, further **characterised in that** the bed (303) of active material is contained between two co-axial gas permeable electrodes (304, 305) and two unpermeable transverse insulating supports (306, 307), the transverse support (306) nearer the inlet port (301) to the reactor has a plurality of axially directed gas flow passages (308) disposed around its periphery, the transverse support (307) nearer the outlet port (302) of the reactor has a central hole (309) the diameter of which is approximately equal to the diameter of the inner co-axial electrode (304) and there is provided means for applying to the inner electrode (304) a potential sufficient to excite and maintain a plasma in a gaseous medium passing through the bed (303) of active material.

## Patentansprüche

1. Reaktor für die Behandlung eines gasförmigen Mediums, umfassend eine zylindrische Reaktorkammer (300) mit einer Einlassöffnung (301) und einer Auslassöffnung (302) für ein zu verarbeitendes gasförmiges Medium, ein hohles, zylindrisches gaspermeables Bett (303), enthalten in der Reaktorkammer (300) und im Wesentlichen koaxial zu derselben, wobei das gaspermeable Bett ein katalytisch aktives Material zur Wechselwirkung mit dem gasförmigen Medium umfasst, um eine chemische Reaktion darin zu fördern, einen ringförmigen Raum (311) zwischen der Außenseite des Bettes aus aktivem Material (303) und der Innenseite der Reaktorkammer (300) und Mittel (306), um das gasförmige Medium zum Eintritt in den ringförmigen Raum (311) an einem Ende in axialer Richtung zu zwingen, wobei das andere Ende des ringförmigen Raumes (311) für axialen Durchstrom von gasförmigem Medium durch denselben geschlossen ist, wobei das gasförmige Medium radial durch das Bett (303) aus aktivem Material hindurch tritt, **dadurch gekennzeichnet, dass** der ringförmige Raum (311) so konfiguriert ist, dass er eine Impedanz für den Durchfluss des gasförmigen Mediums bereitstellt, der entlang der Länge des ringförmigen Raumes (311) in der Richtung von dem einen Ende auf das andere Ende hin zunimmt.

2. Reaktor gemäß Anspruch 1, zusätzlich **dadurch gekennzeichnet, dass** die Breite des ringförmigen Raumes (311) kontinuierlich entlang der Länge des ringförmigen Raumes (311) abnimmt.

3. Reaktor gemäß Anspruch 1, zusätzlich **dadurch gekennzeichnet, dass** mindestens eine diskontinuierliche Breitenabnahme des ringförmigen Raumes (311) entlang der Länge dieses ringförmigem Raumes (311) vorhanden ist.

4. Reaktor gemäß Anspruch 3, zusätzlich **dadurch gekennzeichnet, dass** eine einzige diskontinuierliche Breitenverringerung des ringförmigen Raumes (311) ungefähr in der Mitte dieses ringförmigen Raumes (311) vorhanden ist.

5. Reaktor gemäß Anspruch 3, zusätzlich **dadurch gekennzeichnet, dass** zwei diskontinuierliche Breitenabnahmen des ringförmigen Raumes (311) vorhanden sind.

6. Reaktor gemäß Anspruch 5, zusätzlich **dadurch gekennzeichnet, dass** die erste diskontinuierliche Breitenabnahme des ringförmigen Raumes (311) etwa in der Mitte dieses ringförmigen Raumes (311) auftritt und die zweite diskontinuierliche Breitenabnahme des ringförmigen Raumes (311) bei etwa drei Viertel entlang der Länge dieses ringförmigen Raumes (311) auftritt.

7. Reaktor gemäß Anspruch 5, zusätzlich **dadurch gekennzeichnet, dass** die zweite diskontinuierliche Breitenabnahme des ringförmigen Raumes (311) kleiner als die erste diskontinuierliche Breitenabnahme des ringförmigen Raumes (311) ist.

8. Reaktor gemäß Anspruch 1, zusätzlich **dadurch gekennzeichnet, dass** ein erster Teil der Reaktorkammer (300) mit mindestens einer sich axial erstreckenden Expansionskammer (901) versehen ist.

9. Reaktor gemäß einem der vorstehenden Ansprüche, zusätzlich **dadurch gekennzeichnet, dass** das Bett (303) aus aktivem Material zwischen zwei koaxialen, gaspermeablen Elektroden (304, 305) und zwei nicht permeablen traversen isolierenden Trägern (306, 307) enthalten ist, wobei der traverse Träger (306) näher an der Einlassöffnung (301) zum Reaktor eine Vielzahl von axial ausgerichteten Gasströmungspassagen (308) aufweist, die entlang seiner Peripherie angeordnet sind, wobei der traverse Träger (307) näher an der Auslassöffnung (302) des Reaktors ein zentrales Loch (309) aufweist, dessen Durchmesser in etwa gleich dem Durchmesser der inneren koaxialen Elektrode (304) ist, und dass Mittel zum Anlegen eines Potenzials an die innere Elektrode (304) vorgesehen sind, das ausreicht, ein Plasma in einem gasförmigen Medium, das durch das Bett (303) aus aktivem Material hindurch tritt, anzuregen und aufrecht zu erhalten.

## Revendications

1. Réacteur pour le traitement d'un milieu gazeux, comportant une chambre de réacteur cylindrique (300) ayant un port d'admission (301) et un port de sortie (302) pour un milieu gazeux à traiter, un lit perméable aux gaz cylindrique creux (303) contenu dans la chambre de réacteur (300) et pratiquement coaxial avec celle-ci, le lit perméable aux gaz comportant un matériau catalytiquement actif pour interagir avec le milieu gazeux afin de favoriser une réaction chimique à l'intérieur, un espace annulaire (311) entre l'extérieur du lit de matériau actif (303) et l'intérieur de la chambre de réacteur (300) et des moyens (306) pour obliger le milieu gazeux à entrer dans ledit espace annulaire (311) au niveau d'une première extrémité dans une direction axiale, l'autre extrémité dudit espace annulaire (311) étant fermée à l'écoulement axial du milieu gazeux depuis celui-ci, le milieu gazeux passant radialement à travers le lit (303) de matériau actif, **caractérisé en ce que** ledit espace annulaire (311) est configuré pour affecter une impédance à l'écoulement du milieu gazeux qui augmente le long de la longueur dudit espace annulaire (311) dans la direction allant de ladite première extrémité vers ladite autre extrémité.

2. Réacteur selon la revendication 1, **caractérisé de plus en ce que** la largeur dudit espace annulaire (311) diminue en continu le long de la longueur dudit espace annulaire (311).

3. Réacteur selon la revendication 1, **caractérisé de plus en ce qu**'il y a au moins une diminution discontinue de la largeur dudit espace annulaire (311) le long de la longueur dudit espace annulaire (311).

4. Réacteur selon la revendication 3, **caractérisé de plus en ce qu**'il y a une diminution discontinue unique de la largeur dudit espace annulaire (311) approximativement au milieu dudit espace annulaire (311).

5. Réacteur selon la revendication 3, **caractérisé de plus en ce qu'**il y a deux diminutions discontinues de la largeur dudit espace annulaire (311).

6. Réacteur selon la revendication 5, **caractérisé de plus en ce que** la première diminution discontinue de la largeur dudit espace annulaire (311) apparaît approximativement au milieu dudit espace annulaire (311) et la seconde diminution discontinue de la largeur de l'espace annulaire (311) apparaît approximativement aux trois quarts de la longueur dudit espace annulaire (311).

7. Réacteur selon la revendication 5, **caractérisé de plus en ce que** la seconde diminution discontinue de la largeur dudit espace annulaire (311) est inférieure à la première diminution discontinue de la largeur dudit espace annulaire (311)

8. Réacteur selon la revendication 1, **caractérisé de plus en ce qu**'une première partie de la chambre de réacteur (300) est munie d'au moins une chambre de prolongement s'étendant axialement (901).

9. Réacteur selon l'une quelconque des revendications précédentes, **caractérisé de plus en ce que** le lit (303) de matériau actif est contenu entre deux électrodes perméables aux gaz coaxiales (304, 305) et deux supports isolants transversaux non-imperméables (306, 307), le support transversal (306) plus proche du port d'admission (301) du réacteur ayant une pluralité de passages d'écoulement gazeux dirigés axialement (308) disposés autour de sa périphérie, le support transversal (307) plus proche du port de sortie (302) du réacteur ayant un trou central (309) dont le diamètre est approximativement égal au diamètre de l'électrode coaxiale intérieure (304), et des moyens sont fournis pour appliquer à l'électrode intérieure (304) un potentiel suffisant pour exciter et maintenir un plasma dans un milieu gazeux passant à travers le lit (303) de matériau actif.
